(19) **Europäisches Patentamt / European Patent Office / Office européen des brevets**

(11) **EP 2 078 214 B1**

(12) # EUROPÄISCHE PATENTSCHRIFT

(45) Veröffentlichungstag und Bekanntmachung des Hinweises auf die Patenterteilung:
**11.05.2011 Patentblatt 2011/19**

(21) Anmeldenummer: **07819264.8**

(22) Anmeldetag: **24.10.2007**

(51) Int Cl.:
*G01S 13/88* (2006.01)     *F15B 15/28* (2006.01)

(86) Internationale Anmeldenummer:
**PCT/EP2007/009205**

(87) Internationale Veröffentlichungsnummer:
**WO 2008/055590 (15.05.2008 Gazette 2008/20)**

(54) **POSITIONSMESSVORRICHTUNG ZUR BESTIMMUNG EINER POSITION EINES MESSOBJEKTS**

POSITION MEASURING DEVICE FOR DETERMINING THE POSITION OF AN OBJECT TO BE MEASURED

DISPOSITIF DE MESURE DE POSITION POUR LA DÉTERMINATION D'UNE POSITION D'UN OBJET DE MESURE

(84) Benannte Vertragsstaaten:
**CH DE FR GB IT LI**

(30) Priorität: **09.11.2006 DE 102006052790**

(43) Veröffentlichungstag der Anmeldung:
**15.07.2009 Patentblatt 2009/29**

(73) Patentinhaber: **FESTO AG & Co. KG**
**73734 Esslingen (DE)**

(72) Erfinder:
 • **REININGER, Thomas**
  **73249 Wernau (DE)**
 • **MAIER, Marcus, Dr. Ing.**
  **73760 Ostfildern (DE)**
 • **VON ZEPPELIN, Matthias**
  **73669 Lichtenwald (DE)**

(74) Vertreter: **Bregenzer, Michael**
**Patentanwälte**
**Magenbauer & Kollegen**
**Plochinger Strasse 109**
**73730 Esslingen (DE)**

(56) Entgegenhaltungen:
**EP-A- 0 199 224        EP-A- 1 752 792**
**WO-A1-2007/128369    US-A- 4 588 953**

 • **DISCLOSED ANONYMOUSLY: "Microwave Piston Position Detection" RESEARCH DISCLOSURE, MASON PUBLICATIONS, HAMPSHIRE, GB, Bd. 279, Juli 1987 (1987-07), Seiten 435A-435B, XP002104705 ISSN: 0374-4353**
 • **BAUDOT, ANNE: "Cryopreservation d'organes par vitrification, mesures calorimetriques et mesures diélectriques" 5. Februar 1997 (1997-02-05), THÈSE, CNRS-CRTBT , GRENOBLE , XP002466825 Seite 120 - Seite 124**

EP 2 078 214 B1

## Beschreibung

Die Erfindung betrifft eine Positionsmessvorrichtung mit einer Mikrowellen-Antennenanordnung zur Bestimmung einer Position eines in einem Bewegungsraum beweglichen Messobjekts anhand von Mikrowellen, wobei der Bewegungsraum zumindest teilweise einen Hohlleiter zum Leiten der Mikrowellen bildet.

Eine aus der DE 102 05 904 A1 bekannte Positionsmessvorrichtung hat eine Koppelsonde, die über ein dielektrisches Haltesystem mit einem Wellenleiter verbunden ist. Die Koppelsonde ist beispielsweise aus Metall. Ein vorgelagertes Schutzteil schützt die Koppelsonde mechanischen Beschädigungen. Die Positionsmessvorrichtung misst eine Position eines Kolbens, der in einem Zylindergehäuse eines pneumatischen Zylinders hin und her beweglich ist. Eine Koppelsonde koppelt die Mikrowellen in den Bewegungsraum für den Kolben ein, sodass die Mikrowellen in den Bewegungsraum, der einen Hohlleiter bildet, zum Kolben hin geleitet werden. Der Kolben bildet einen Reflektor für die Mikrowellen, sodass sie wieder über den Hohlleiter zu der Koppelsonde gelangen. Die Positionsmessvorrichtung bestimmt die Position des Kolbens in dem Bewegungsraum oder Hohlleiter anhand eines Phasenvergleiches der Mikrowellen.

Die Position und Qualität der Koppelsonde in Bezug auf den Bewegungsraum und somit den Hohlleiter ist für die Messgenauigkeit wesentlich. Bei der aus der DE 102 05 904 A1 bekannten Positionsmessvorrichtung sind eine Koppelsonde und ein dielektrisches Haltesystem dafür vorgesehen. Die Bauweise ist kompliziert.

Eine derartige Positionsmessvorrichtung geht beispielsweise aus EP 1 752 792 A1 oder WO 2007/128369 A1 hervor. Der jeweilige zum Hohlleiter Koaxialleiter-Tubusabschnitt ist bei den aus diesen Druckschriften bekannten Abstandsmessvorrichtungen durch eine Schutzabdeckungseinrichtung geschützt.

Aus US 4,588,953 geht eine Positionsmessvorrichtung hervor, bei der eine Antenne in einen Isolator eingeschraubt ist.

Es ist daher die Aufgabe der vorliegenden Erfindung, die Messgenauigkeit einer Positionsmessvorrichtung zu verbessern.

Zur Lösung der Aufgabe ist eine Positionsmessvorrichtung gemäß der technischen Lehre des Anspruchs 1 vorgesehen.

Der Koaxialleiterabschnitt des Antennenkörpers ist zweckmäßigerweise innen hohl. Er hat einen zu dem Hohlleiter koaxialen Koaxialleiter-Tubusabschnitt. Der Tubusabschnitt hat eine Ausnehmung, an der die zweite Polfläche angeordnet ist. Zusammen mit der am Außenumfang des Tubusabschnitts angeordneten ersten Polfläche wird der Koaxialleiter-Tubusabschnitt gebildet. Der Tubusabschnitt bildet sozusagen den Einkopplungsabschnitt oder Auskopplungsabschnitt der Mikrowellen-Antennenanordnung bezüglich des Bewegungsraums beziehungsweise des Hohlleiters. Wegen des Skin-Effektes ist es möglich, dass der Innenleiter des Koaxialleiterabschnittes hohl ist.

Die Ausnehmung des Koaxialleiter-Tubusabschnittes ist zum Bewegungsraum hin offen und mittig. Das Messobjekt oder eine an dem Messobjekt angeordnete Einrichtung, zum Beispiel ein an einem Kolben angeordneter Stoßdämpfer, kann in die Ausnehmung eindringen. Dennoch kann das Messobjekt nahe an die Stirnseite des Koaxialleiterabschnitts beziehungsweise Koaxialleiter-Tubusabschnittes herangelangen, was die Messgenauigkeit der Positionsmessvorrichtung verbessert.

Ein Grundgedanke der Erfindung ist es, dass die Mikrowellen-Antennenanordnung einen dielektrischen Antennenkörper aufweist, an dem eine erste und eine zweite Polfläche in Form eines Koaxialleiters angeordnet sind. Die Mikrowellen werden sozusagen koaxial in den Hohlleiter eingekoppelt, wobei beispielsweise koaxiale TEM-Mikrowellen in E01-Wellen übergehen. Innen und außen am ringförmigen Isolationsbereich befinden sich die erste und zweite Polfläche. Zumindest in einem Einkopplungsbereich, in dem der Koaxialleiterabschnitt die Mikrowellen in den Hohlleiter einkoppelt oder aus dem Hohlleiter auskoppelt, sind der Koaxialleiterabschnitt und der Hohlleiter zueinander koaxial. Die Längserstreckungsrichtungen des Koaxialleiterabschnittes und des Hohlleiters sind in dem Koppelabschnitt parallel zueinander. Zweckmäßigerweise sind der Koaxialleiterabschnitt und der Hohlleiterabschnitt in dem Einkopplungsbereich oder Auskopplungsbereich konzentrisch.

Der Antennenkörper bildet zweckmäßigerweise eine Aperturantenne.

Die Stirnseite des Antennenkörpers reicht weit in den Bewegungsraum oder Hohlleiter hinein, sodass die Messgenauigkeit der erfindungsgemäßen Positionsmessvorrichtung groß ist. Der Koaxialleiterabschnitt selbst bildet vorteilhaft keinen Hohlleiter, sodass unerwünschte Moden der Mikrowellen vermieden werden.

Durch die Koaxialstruktur entsteht in dem Antennenkörper eine TEM-Welle, wohingegen unerwünschte Wellen, beispielsweise H11-Mikrowellen beziehungsweise TE11-Mikrowellen, vermieden werden.

Das bewegliche Messobjekt, beispielsweise das Aktorglied oder ein Ventilglied, reflektiert Mikrowellen, die mit Hilfe der Koppelsonde in die Leitungsstruktur bzw. das Gehäuse eingekoppelt werden. Anhand einer Laufzeitmessung und/oder anhand eines Phasenvergleichs zwischen ausgesendeten Mikrowellen und empfangenen Mikrowellen, die beispielsweise einen Frequenzbereich von 10 MHz - 25 GHz, vorteilhaft 1 GHz - 25 GHz, haben, ermittelt die Positionsmessvorrichtung einen jeweiligen Abstand des Messobjekts von der Koppelsonde. Es versteht sich, dass die Mikrowellen-Antennenanordnung auch zwei Koppelsonden enthalten kann, eine zum Senden und eine zum Empfangen von Mikrowellen. Besonders bevorzugt ist jedoch, wenn nur eine einzige Koppelsonde erforderlich ist.

Beispielsweise bildet die Positionsmessvorrichtung einen Bestandteil einer Aktorvorrichtung. Die Aktorvorrichtung, z.B. ein elektrischer und/oder fluidtechnischer Antrieb hat ein elektrisch leitfähiges Gehäuse, in dem ein Aktorglied, beispielsweise ein Läufer eines elektrischen Motors oder ein Kolben eines pneumatischen Antriebs, beweglich angeordnet ist. Das Aktorglied ist vorzugsweise linear beweglich. Die Positionsmessvorrichtung misst z.B. den Abstand des Aktorglieds von einem Endanschlag.

Die erfindungsgemäße Positionsmessvorrichtung kann aber auch einen Bestandteil eines fluidtechnischen Wartungsgerätes bilden, beispielsweise eines pneumatischen Wartungsgerätes. Die Positionsmessvorrichtung dient dann beispielsweise zur Mengenmessung eines Additivs für das Fluid, beispielsweise eines Öls, das in das Fluid eingespritzt wird, oder zu Messungen eines Ausscheidungsprodukts, das das Wartungsgerät aus dem Fluid extrahiert und in einem Aufnahmeraum deponiert. Die Positionsmessvorrichtung misst den Füllstand des Additivs bzw. des Ausscheidungsprodukts in dem Aufnahmeraum.

Eine weitere Variante der Erfindung kann vorsehen, dass die Positionsmessvorrichtung einen Bestandteil eines Fluidventils bildet, beispielsweise eines pneumatischen Ventils. Das Messobjekt ist in diesem Falle z.B. das Ventilglied des Fluidventils, beispielsweise ein Antriebskolben, mit dem das Ventilglied pneumatisch angetrieben wird.

Es versteht sich, dass insbesondere dann, wenn an dem Messobjekt keine vorstehenden Bauteile vorhanden sind, der Koaxialleiterabschnitt auch mit einer flachen Stirnseite in den Hohlleiter münden kann. Beispielsweise bildet dann eine Stirnseite des Innenleiters eine Polfläche.

Eine äußere Polfläche des Antennenkörpers ist mit dem Hohlleiter elektrisch verbunden.

Der Koaxialleiter-Tubusabschnitt ist zweckmäßigerweise über einen Koaxialleiter-Verbindungsabschnitt mit einer Hochfrequenz-Mikrowellensende- und/oder -empfangseinrichtung verbunden. Die Bauteile dieser Sende- und Empfangseinrichtung können vorteilhaft an dem Antennenkörper angeordnet sein. Der Koaxialleiter-Verbindungsabschnitt hat zweckmäßigerweise einen kleineren Durchmesser als der Koaxialleiterabschnitt, der mit dem Hohlleiter verbunden ist.

Der Antennenkörper ist zweckmäßigerweise zur Bildung der ersten und/oder der zweiten Polfläche mit einer elektrisch leitfähigen Beschichtung versehen, beispielsweise einer Metallisierung.

Die Beschichtung ist aus beispielsweise Kupfer und/oder Nickel und/oder Aluminium und/oder Gold oder einem sonstigen elektrisch leitfähigen Material. Die Beschichtung kann z.B. durch Galvanisieren und/oder durch ein Bedampfungsverfahren hergestellt werden, beispielsweise ein physikalisches und/oder chemisches Bedampfungsverfahren (PVD = Physical Vapor Deposition / CVD = Chemical Vapor Deposition). Bei dem Antennenkörper kann es sich aber auch um einen dreidimensionalen Leiterkörper handeln, beispielsweise einen sogenannten MID-Leiterkörper (MID = Moulded Interconnect Device).

Es wäre aber auch denkbar, dass eine oder beide Polflächen durch einen Metallkörper, beispielsweise einen becherartigen Metallkörper, gebildet sind, an die das dielektrische Material des Antennenkörpers angespritzt ist.

Zweckmäßigerweise ist eine Anpassungsstruktur oder ein Anpassungsnetzwerk zur Anpassung der Impedanz der Mikrowellen-Antennenanordnung, insbesondere des Antennenkörpers, an eine Impedanz einer Hochfrequenz-Mikrowellensende- /Empfangseinrichtung vorgesehen.

Die Abstände zwischen den am Antennenkörper angeordneten Polflächen sind im Wesentlichen konstant. Vorzugsweise wird für den elektrischen Antennenkörper ein Kunststoffmaterial verwendet, das eine geringe Wärmeausdehnung hat. Als zweckmäßig haben sich beispielsweise Polycarbonat-Werkstoffe, z.B. Lexan, Makrolon oder dergleichen, oder flüssigkristalliner Copolyester (Liquid Crystal Polymere = LCP), z.B. Vectra, herausgestellt, der gute Festigkeitseigenschaften und eine niedrige Wärmeausdehnung aufweist.

Die Erfinder haben erkannt, dass der Antennenkörper, wenn er Feuchtigkeit aufnimmt, veränderte Dielektrizitätseigenschaften aufweist.

Wenn der Antennenkörper Feuchtigkeit aufnimmt, verändern sich seine Dielektrizitätseigenschaften. Die Umgebung des Antennenkörpers kann Feuchtigkeit enthalten, die eine Feuchtigkeitsaufnahme des Antennenkörpers bewirkt. Wenn der Antennenkörper z.B. in einem pneumatischen Aktor angeordnet ist, kann in der Druckluft enthaltene Feuchtigkeit in den Antennenkörper eindringen. Z.B. kann der Antennenkörper aus einem Kunststoff bestehen, der Feuchtigkeit aufnimmt. Beispielsweise nimmt Polyamid bis zu 10% Massenanteile Feuchtigkeit auf, wobei sich seine Dielektrizitätszahl von 3,5 (= trockenes Polyamid) auf 7 erhöht (bei 23 Grad Celsius Umgebungstemperatur und 50% relative Luftfeuchtigkeit).

Die Ausbreitungsgeschwindigkeit der Mikrowellen in dem Antennenkörper ist umgekehrt proportional zur Quadratwurzel der relativen Dielektrizitätszahl des Antennenkörpers. Die Messung der Position des Messobjekts hängt direkt oder indirekt von der Laufzeit der Mikrowellen in dem Antennenkörper und dem Hohlleiter ab, in dem sich das Messobjekt bewegt. Wenn sich der Antennenkörper verhältnismäßig weit den Hohlleiter hinein erstreckt, wirkt sich eine Veränderung seiner Dielektrizitätseigenschaften auf die Ausbreitungsgeschwindigkeit und Laufzeit der Mikrowellen aus, so dass die "elektrische" Genauigkeit der Positionsmessung abnimmt. Bei einer Veränderung der Dielektrizitätszahl von 3,3, auf 3,29 kann sich die Genauigkeit der Positionsmessung des Messobjekts in einem Beispielfall bereits um 0,3 mm verändern, wobei das Messobjekt dabei verhältnismäßig weit von dem Antennenkörper entfernt in dem Hohlleiter angeordnet ist und die Mikrowellen einen "langen" Weg in dem Hohlleiter zurücklegen. Wenn das Messobjekt nahe beim Antennenkörper ist, wirkt sich die Veränderung der Dielektrizitätseigenschaften noch um z.B. einen Faktor 5 durch Nahfeldeffekte stärker aus.

Damit sich die dielektrischen Eigenschaften des Antennenkörpers nicht oder nur unwesentlich verändern und/ oder die Auswirkungen veränderter Dielektrizitätseigenschaften des Antennenkörpers kompensiert werden und somit zweckmäßigerweise eine Messgenauigkeit von 0,1 mm oder besser erzielt wird, sind die nachfolgenden Maßnahmen vorteilhaft:

Die folgenden Maßnahmen sind vorteilhaft, um einen Feuchtigkeitseintritt in den dielektrischen Antennenkörper oder Feuchtigkeitseintritt aus dem dielektrischen Antennenkörper zu hemmen oder zu verhindern.

Der Antennenkörper kann ganz oder teilweise mit einer Feuchtigkeitsdurchtritt hemmenden oder verhindernden Oberflächenlage versehen sein. Die Oberflächenlage kann durch eine Beschichtung oder einen Schutzkörper, beispielsweise eine Hülse oder eine Scheibe, eine Platte oder einen Lack, gebildet sein. Beispielsweise eignen sich vernetzte Kohlenstoffmoleküle als Beschichtung. Diese Oberflächenlage ist zweckmäßigerweise elektrisch isolierend. Beispielsweise ist eine metallische Beschichtung, die hinreichend dünn ist, nicht geeignet, in ausreichendem Maße elektrisch zu leiten. Diese metallische Beschichtung kann zwar Feuchtigkeitsdurchtritt in den Antennenkörper hinein hemmen, Mikrowellen aber durchlassen. Die Mikrowellen werden somit nicht reflektiert.

Die Oberflächenlage ist beispielsweise an einem Teilbereich angeordnet, der ohne die obengenannte elektrisch leitende Beschichtung versehen ist. Somit ist der Antennenkörper zweckmäßigerweise vollständig mit einer Feuchtigkeitsdurchtritt hemmenden oder verhindernden Oberfläche versehen, wobei Teilbereiche elektrisch leitend sind und die erste und/oder zweite Polfläche bilden, während andere Teilbereiche elektrisch nicht leitend oder isolierend gegen Feuchtigkeitsdurchtritt in den und aus dem Antennenkörper beschichtet sind.

Es versteht sich, dass die Oberflächenlage auch einen mechanischen Schutz bilden kann, beispielsweise an der dem Bewegungsraum oder Hohlleiter zugewandten Stirnseite des Koaxialleiterabschnittes. Der Antennenkörper ist gegenüber mechanischen Einflüssen geschützt, beispielsweise Druckluftstößen, Stößen des Messobjektes, beispielsweise eines Kolbens eines pneumatischen Zylinders.

Beispielsweise ist eine elektrisch leitfähige Beschichtung zur Bildung der Polflächen vorgesehen, die den Feuchtigkeitsdurchtritt hemmt oder verhindert. Dazu kann die obengenannte Beschichtung vorteilhaft geeignet sein. Vorteilhafterweise sind allerdings Teilbereiche des Antennenkörpers frei von der elektrisch leitfähigen Beschichtung. Beispielsweise sind diese Teilbereiche des ringförmigen Isolationsbereichs an der Stirnseite des Koaxialleiterabschnittes elektrisch isolierende Flächen an einem Anschlussabschnitt oder Koppelabschnitt, an den eine Hochfrequenz-Mikrowellensende- /Empfangseinrichtung angeschlossen ist. Auch ein Durchlass oder eine Ausnehmung an dem Antennenkörper, die beispielsweise zum Einbringen von Fluid, insbesondere Druckluft, dient, ist zweckmäßigerweise frei von der elektrisch leitfähigen Beschichtung.

Es ist ferner denkbar, dass der Antennenkörper eine Mehrfachbeschichtung aufweist. Beispielsweise kann eine Schicht elektrisch leitend sein, um die Polfläche(n) zu bilden. Diese elektrisch leitfähige Beschichtung kann wiederum mit einer Feuchtigkeitsdurchtritt hemmenden Beschichtung versehen sein. Der Antennenkörper kann vollständig mit einer Feuchtigkeitsdurchtritt hemmenden oder verhindernden Beschichtung, die zweckmäßigerweise elektrisch isolierend ist, beschichtet sein. Diese elektrisch nicht leitende Beschichtung hält zwar den Feuchtigkeitsgehalt des Antennenkörpers konstant, reflektiert aber nicht in unerwünschter Weise die Mikrowellen.

Ferner kann vorgesehen sein, dass der Antennenkörper aus einem Feuchtigkeitseintritt extrem hemmenden oder verhindernden Material besteht, beispielsweise aus Polyethylen (PE), Polypropylen (PP), Teflon (PTFE) oder dergleichen. Auch Keramik, insbesondere glasierte Keramik, Glas, reines Silizium oder dergleichen weisen im Wesentlichen konstante Feuchtigkeitseigenschaften auf. Das Silizium ist zweckmäßigerweise undotiert, das heißt, es weist einen geringen elektrischen Verlust auf. Der Kunststoff kann in Teilbereichen faserverstärkt sein, beispielsweise mit Glasfasern oder Kohlefasern, wobei zweckmäßigerweise die Verteilung der Fasern so gewählt ist, dass die Resistenz des Antennenkörpers gegen Feuchtigkeitseintritt nicht oder nicht wesentlich verschlechtert wird.

Auch ein Austrocknen des Antennenkörpers, das heißt eine Verringerung seiner relativen Feuchtigkeit, kann die dielektrischen Eigenschaften verändern. Daher sieht eine weitere Maßnahme vor, dass der Antennenkörper vor seiner Montage oder Beschichtung getrocknet wird, beispielsweise in einem Ofen, im Rahmen einer Gefriertrocknung oder dergleichen. Ferner ist es möglich, dass die Positionsmessvorrichtung - auch im in eine Aktorvorrichtung eingebauten Zustand - beim Transport mittels Silika-Gel oder einem sonstigen Trockenmittel vor unerwünschtem Feuchtigkeitseintritt in den Antennenkörper geschützt wird. Auch vorgegebene Betriebsbedingungen, beispielsweise das Betreiben eines Aktors mit Druckluft, die eine vorbestimmte Luftfeuchtigkeit aufweist, können als zweckmäßige Maßnahme für einen zumindest im Wesentlichen konstanten Feuchtigkeitsgehalt des Antennenkörpers zweckmäßig sein.

Ferner ist es denkbar, dass die Positionsmessvorrichtung eine Heizeinrichtung aufweist, die im oder am Antennenkörper angeordnet ist. Die Heizeinrichtung heizt die dielektrischen Körper, sodass die darin enthaltene Feuchtigkeit auf einem konstanten, zweckmäßigerweise niedrigen Wert gehalten wird. Somit verändern sich die dielektrischen Eigenschaften des Körpers, der sich im Ausbreitungsbereich der Mikrowellen befindet, nicht oder nur unwesentlich, sodass die Messgenauigkeit der Positionsmessvorrichtung hoch ist. Die relative Dielektrizitätszahl des dielektrischen Körpers bleibt im Wesentlichen konstant. Die Ausbreitungsgeschwindigkeit der elektromagnetischen Mikrowellen, die umgekehrt proportional zur Quadratwurzel der relativen Dielektrizitätszahl ist, bleibt im Wesentlichen konstant.

Die Heizeinrichtung hat zweckmäßigerweise Heizleiter, die senkrecht oder im Wesentlichen senkrecht zum elektrischen Feldverlauf der Mikrowellen stehen. Somit wird das elektromagnetische Feld der Mikrowellen durch die Heizleiter oder den Heizleiter nicht beeinträchtigt.

Die vorgenannten Maßnahmen gegen eine Veränderung des Feuchtigkeitsgehaltes des Antennenkörpers sind bei einem Antennenkörper mit einem verhältnismäßig großen Volumen besonders zweckmäßig. Es ist nicht erforderlich, dass sich der Antennenkörper, wie der oben erwähnte Antennenkörper, mit einem Koaxialleiterabschnitt verhältnismäßig weit in den Hohlleiter hinein erstreckt. Insofern sind die vorgenannten Maßnahmen auch bei geometrisch anders ausgestalteten Antennenkörpern, das heißt Antennenkörpern ohne einen Koaxialleiterabschnitt der vorbeschriebenen Art, zweckmäßig.

Es ist ferner zweckmäßig, elektrische Eigenschaften des dielektrischen Antennenkörpers von Zeit zu Zeit, beispielsweise während Betriebspausen, in regelmäßigen Abständen, auf einen Steuerbefehl hin oder dergleichen, zu überprüfen. Wenn der Antennenkörper durch äußere Einflüsse, beispielsweise durch Feuchtigkeitseintritt, durch mechanische Verformung oder dergleichen veränderte elektrische Eigenschaften aufweist, haben sich die nachfolgenden Maßnahmen als zweckmäßig erwiesen.

Die Positionsmessvorrichtung sendet Mikrowellen mit mindestens einer ersten Frequenz, um die Position des Messobjektes zu ermitteln. Eine zweite Frequenz ist vorgesehen, um elektrische Eigenschaften des Antennenkörpers zu ermitteln. Die zweiten Mikrowellen werden innerhalb des Antennenkörpers reflektiert, beispielsweise durch einen Schwingkreis. Der Antennenkörper verhält sich wie eine elektrische Leitung, die für die Messung mit den Mikrowellen der mindestens einen zweiten Frequenz an einem Ende, das von der Sende-/Empfangseinrichtung entfernt ist, kurzgeschlossen ist.

Sofern eine elektrische Leitung an Ihrem Ende kurzgeschlossen ist, gilt für die Phase φ eines Eingangsreflexionsfaktors der Leitung:

$$\varphi = \pi - 4\pi(x\ /\lambda) \tag{1}$$

wobei λ die Wellenlänge der Mikrowellen und x die Position des Kurzschlusses gemessen vom Eingang der Leitung sind. Der Antennenkörper ist bei der zweiten Frequenz zur Ermittlung mindestens einer elektrischen Eigenschaft des Antennenkörpers zweckmäßigerweise durch einen Schwingkreis kurzgeschlossen, wobei x die Position des Schwingkreises gemessen vom Eingang des Antennenkörpers ist.

Der Antennenkörper stellt ein Dielektrikum mit einer Dielektrizitätszahl εr dar, so dass die Wellenlänge λ im folgenden Verhältnis zur Wellenlänge λ0 im Freiraum steht:

$$\lambda = \lambda 0\ /\ SQRT\ (\varepsilon r)\ bzw.\ \lambda = \frac{\lambda 0}{\sqrt{\varepsilon r}} \tag{2}$$

mit

$$\lambda 0 = c0/fres\ bzw.\ \lambda 0 = \frac{c0}{fres} \tag{3}$$

wobei c0 die Lichtgeschwindigkeit und fres die Resonanzfrequenz des Schwingkreises sind. Die Resonanzfrequenz fres entspricht der zweiten Frequenz der Mikrowellen. Somit kann aus einer gemessenen Phase φ des Eingangsreflexionsfaktors anhand von (1) bis (3) die Dielektrizitätszahl εr des Antennenkörpers ermittelt werden.

Nachfolgend werden Ausführungsbeispiele der Erfindung anhand der Zeichnung näher erläutert. Es zeigen:

Fig. 1      eine schematische Querschnittsansicht eines Aktors, der eine erfindungsgemäße Positionsmessvorrichtung aufweist,

Fig. 1a einen alternativ an dem Aktor gemäß Figur 1 anor- denbaren Gehäusedeckel mit einem zweiten Ausführungsbeispiel einer Positionsmessvorrichtung,

Fig. 2a eine Querschnittsansicht etwa entsprechend einer Linie A-A der Aktorvorrichtung gemäß Figur 1,

Fig. 2b eine Querschnittsansicht etwa entsprechend einer Linie B-B der Aktorvorrichtung gemäß Figur 1,

Fig.3a-3c Ausführungsbeispiele von in der Positionsmessvor- richtung gemäß Figur 1 enthaltenen Schwingkreisen,

Fig. 4 ein Prinzipschaltbild des Ausführungsbeispiels ge- mäß Figur 1a,

Fig. 4a ein in seiner Resonanzfrequenz änderbarer Schwing- kreis als Alternative zum Schwingkreis des Prinzipschaltbilds gemäß Figur 4, eingezeichnet als ein Ausschnitt IV von Figur 4,

Fig.5a, 5b eine schematische Querschnittsansicht und eine schematische Längsansicht einer Heizeinrichtung mit einem ringförmigen Heizleiter sowie mit TEM- Mikrowellen,

Fig.6a, 6b eine Querschnittsansicht und eine Längsschnittan- sicht einer Heizeinrichtung mit einem ringförmigen Heizleiter sowie E01-Mikrowellen,

Figur 6c eine Mikrowellen-Antennenanordnung für E01- Mikrowellen,

Fig.7a, 7b eine Querschnittansicht und eine Längsschnittan- sicht einer Heizeinrichtung mit zwei ineinander liegenden Heizleiterringen sowie H11-Mikrowellen

Figur 7c eine Mikrowellen-Antennenanordnung für H11- Mikrowellen,

Fig. 8a, 8b eine Querschnittsansicht und einen Längsschnitt einer Heizeinrichtung mit mehreren flügelradartigen Heizleitern sowie H01-Mikrowellen und

Figur 8c eine Mikrowellen-Antennenanordnung für H01- Mikrowellen.

Bei einer Aktorvorrichtung 10, beispielsweise einem pneumatischen Arbeitszylinder 11, ist ein Aktorglied 14 in einem durch ein Gehäuse 13 gebildeten Bewegungsraum 12 beweglich angeordnet. Das Aktorglied 14 ist beispielsweise ein Kolben 15 des pneumatischen Arbeitszylinders 11. Das Gehäuse 13 hat im vorliegenden Fall einen kreisrunden Querschnitt, wobei auch andere Querschnittsformen denkbar sind, z.B. polygonale. Der Bewegungsraum 12 ist ein Innenraum des Gehäuses 13. Die Aktorvorrichtung 10 ist eine fluidtechnische Aktorvorrichtung. Eine Ventilanordnung 16 speist Druckluft 17 aus einer Druckluftquelle 18 in Druckluftanschlüsse 19, 20 des Gehäuses 13 ein, sodass der Kolben 15 mit der Druckluft 17 beaufschlagt wird und in dem Bewegungsraum 12 linear hin und her bewegt wird. An einem Außenumfang des Kolbens 15 ist eine Dichtung 21 angeordnet.

Das Gehäuse 13 umfasst beispielsweise ein Mittelteil 22 sowie einen Lagerdeckel 23 und einen Abschlussdeckel 24. Der Lagerdeckel 23 wird von einer Kolbenstange 25, die an dem Kolben 15 angeordnet ist, durchdrungen. Die Kolbenstange 25 bildet beispielsweise einen Kraftabgriff. Am Kolben 15 ist in Richtung des Abschlussdeckels 24 eine Dämpfereinrichtung 26 angeordnet. Die Dämpfereinrichtung 26, die eine vor den Kolben 15 vorstehende Einrichtung bildet, dämpft einen Aufprall des Aktorglieds 14 auf einen Endanschlag 27 im Bereich des Abschlussdeckels 24. Die Dämpfereinrichtung 26 dringt in eine Ausnehmung 28 des Abschlussdeckels 24 ein und vermindert beispielsweise das Ausströmen von Druckluft 27 aus dem Druckluftanschluss 20, was die Dämpfung bewirkt. Die Dämpfereinrichtung 26 ist wie die übrigen Komponenten der Aktorvorrichtung 10 lediglich schematisch dargestellt.

Eine Positionsmessvorrichtung 30 dient zur Bestimmung einer Position 29 des Aktorglieds 14 in dem Bewegungsraum 12, beispielsweise eines Abstandes des Aktorglieds 14 von dem Endanschlag 27. Das Aktorglied 14 bildet ein Messobjekt 31 für die Positionsmessvorrichtung 30. Die Positionsmessvorrichtung 30 ermittelt die Position 29 mittels Mikrowellen 32, die sie in den elektrisch leitenden und zumindest teilweise einen Hohlleiter 33 bildenden Bewegungsraum 12 mittels einer Mikrowellen-Antennenanordnung 34 sendet. Die Mikrowellen 32 liegen beispielsweise in einem Frequenzbereich von 0,3 GHz bis 300 GHz, wobei für die Leitung in dem Hohlleiter 33 ein Frequenzbereich von mindestens 1 GHz zweckmäßig ist.

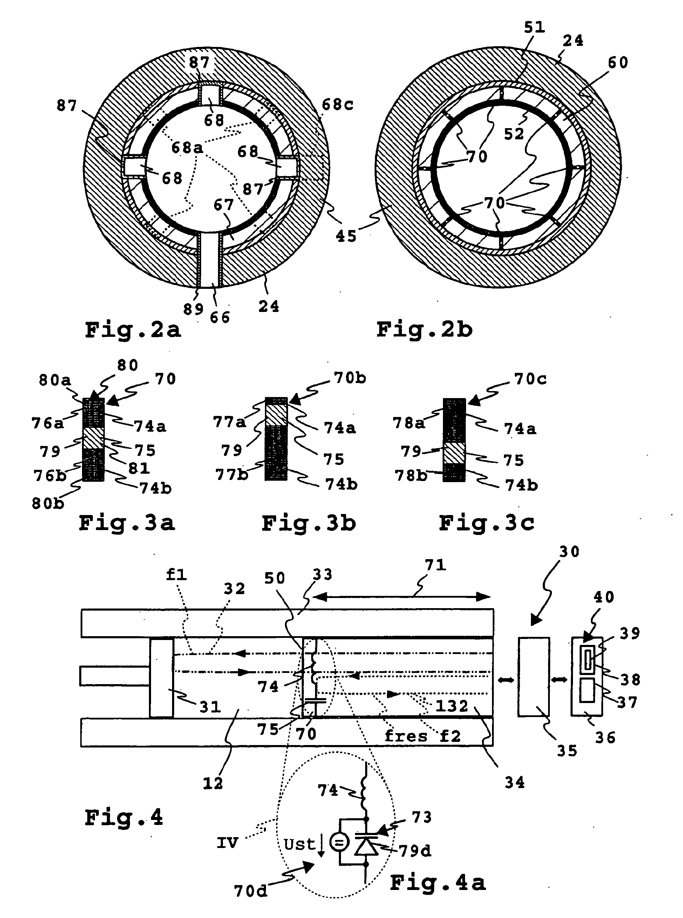

Das Gehäuse 13 besteht im Wesentlichen aus Metall, sodass die Mikrowellen 32 in dem Gehäuse 13 beziehungsweise dem Hohlleiter 33 von der Mikrowellen-Antennenanordnung 34 zu dem Messobjekt 31 beziehungsweise Aktorglied 14 gelangen. Das Aktorglied 14 ist zumindest an seiner der Positionsmessvorrichtung 30 zugewandten Vorderseite elektrisch leitend, sodass die Mikrowellen 32 von dem Aktorglied 14 oder Messobjekt 31 reflektiert und von dem Hohlleiter zurück zu der Positionsmessvorrichtung 30 geleitet werden. Ein beispielhafter Signalfluss der Mikrowellen 32 ist in Figur 4 angedeutet.

Eine Hochfrequenz-Mikrowellen-Sende- und -empfangseinrichtung 35 erzeugt und empfängt die Mikrowellen 32. Die Sende-/Empfangseinrichtung 35 kann Mikrowellen in unterschiedlichen Qualitäten erzeugen, beispielsweise mit wechselnden Frequenzen, gepulste Mikrowellen, frequenzmodulierte Mikrowellen oder dergleichen.

Eine Auswerteeinrichtung 36 ermittelt beispielsweise anhand der Laufzeit von Pulsen der Mikrowellen 32 (Pulsradar), anhand von Phasenverschiebungen 32 zwischen hinlaufenden und rücklaufenden Mikrowellen (Interferometer-Verfahren), anhand eines FMCW-Verfahrens (Frequency Modulated Continuous Wave) <oder dergleichen die Position 29 des Messobjekts 31.

Die Auswerteeinrichtung 36 enthält beispielsweise einen Prozessor 37 sowie Speicher 38 zur Ausführung und Speicherung von Programmcode eines Messmoduls 39, das die vorgenannte Positionsmessfunktionen des Messobjektes 31 durchführt. Der Prozessor 37, der Speicher 38 sowie das Messmodul 39 bilden Messmittel 40. Die Auswerteeinrichtung 36 sendet z.B. drahtgebunden (nicht dargestellt) oder drahtlos über eine Antenne 41 Positionswerte 42 beispielsweise an eine übergeordnete, nicht dargestellte Steuerung.

Ein Antennenkörper 50 der Antennenanordnung 34 ist in einer Aufnahme 43 des Abschlussdeckels 24 angeordnet. An dem Antennenkörper 50 sind eine erste Polfläche 51 und eine zweite Polfläche 52 koaxial angeordnet. Der Antennenkörper 50 besteht aus einem dielektrischen Material, beispielsweise aus einem Kunststoff, und isoliert die Polflächen 51, 52 voneinander. Die Polflächen 51, 52 sind durch elektrisch leitfähige Beschichtungen 53, 54 gebildet. Der Antennenkörper 50 bildet eine Koppelsonde zum Einkoppeln und Auskoppeln der Mikrowellen 32 in beziehungsweise aus dem Hohlleiter 33. Beim Ausführungsbeispiel ist der Antennenkörper 50 unmittelbar in die Aufnahme 43 eingesetzt. Es versteht sich, dass auch eine Trägerstruktur, insbesondere aus einem dielektrischen Material, zum Halten des Antennenkörpers 50 vorgesehen sein kann.

Der Antennenkörper 50 bildet im Wesentlichen einen Koaxialleiter 55 mit der außen liegenden ersten (51) und der innen liegenden zweiten Polfläche 52. Die zweite Polfläche 52 ist als ein hohler Innenleiter 56 ausgestaltet.

Ein Koaxialleiterabschnitt 57 des Koaxialleiters 55 bildet eine Aperturantenne 58. Eine Stirnseite 59 des Koaxialleiterabschnitts 57 mit einem ringförmigen Isolationsbereich 60 ist in den Bewegungsraum 12, das heißt zum Messobjekt 31 hin, orientiert. Der ringförmige Isolationsbereich 60 befindet sich zwischen der ersten und zweiten Polfläche 51, 52. Der vordere Teil des Koaxialleiterabschnitts 57 ist als Koaxialleiter-Tubusabschnitt 61 ausgestaltet, der die Ausnehmung 28 aufweist. Die Ausnehmung 28 ist becherförmig. Der Koaxialleiter-Tubusabschnitt 61 ist konzentrisch zu dem Bewegungsraum 12.

Der Koaxialleiter-Tubusabschnitt 61 kann über einen Koaxialleiter-Verbindungsabschnitt 62 mit der Sende-/Empfangseinrichtung 35 verbunden sein. Der Verbindungsabschnitt 62 ist als ein Koaxialleiter 63 ausgestaltet, dessen Außenleiter durch die sich bis zur Sende-/Empfangseinrichtung 35 erstreckende außenseitige erste Polfläche 51 gebildet ist. Ein Innenleiter 64 im Innern des Koaxialleiter 63 dient zur Verbindung der Sende-/Empfangseinrichtung 35 mit der an der Innenseite der Ausnehmung 28 angeordneten zweiten Polfläche 52. Die Anpassungsstruktur 65 enthält beispielsweise eine topfartige Leitstruktur, in die sich der Innenleiter 64 hinein erstreckt. Zwischen der Anpassungsstruktur 65 und dem Innenleiter 64 besteht keine elektrische Verbindung.

Die Anpassungsstruktur 65 dient zur Anpassung der Impedanz der Antennenanordnung 34 an die Generator- oder Empfängerimpedanz der Sende-/Empfangseinrichtung 35.

Der Verbindungsabschnitt 62 hat einen kleineren Durchmesser als der Koaxialleiter-Tubusabschnitt 61, der zum Ein- und Auskoppeln der Mikrowellen 32 in den oder aus dem Hohlleiter 33 dient.

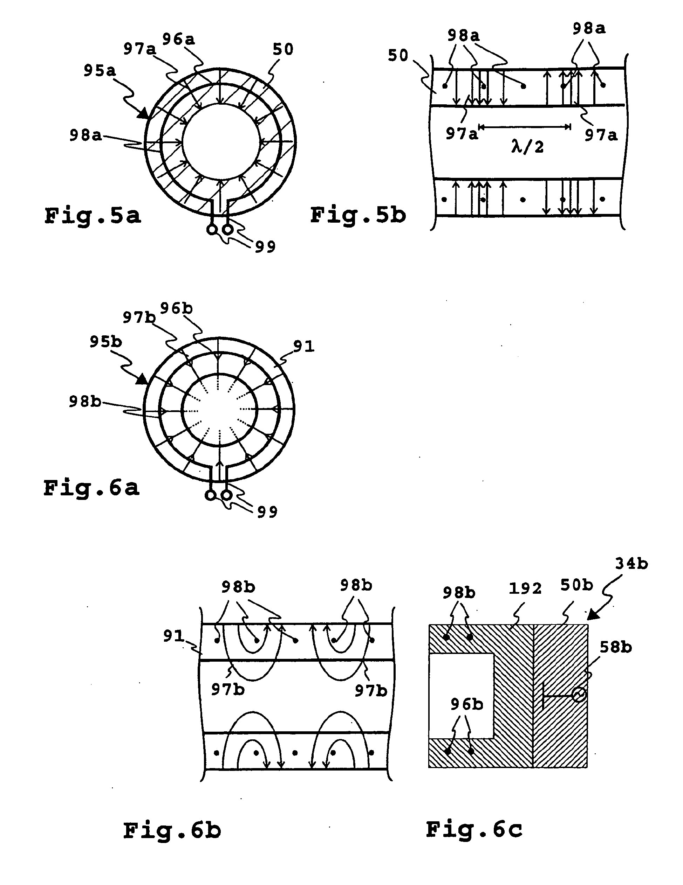

Der Tubusabschnitt 61 und der Hohlleiter 33 sind zueinander koaxial. Die äußere erste Polfläche 61 ist elektrisch mit einer Innenseite des Hohlleiters 33 verbunden. Im Bereich des Verbindungsabschnitts 62 sowie des Tubusabschnittes 61 sind die Mikrowellen 32 beispielsweise TEM-Mikrowellen. In dem Hohlleiter 33 sind die Mikrowellen 32 hingegen zweckmäßigerweise E01-Wellen mit einem Feldverlauf 97b (siehe Figur 6a).

E01-Mikrowellen können auch unmittelbar durch eine schematische dargestellte Mikrowellen-Antennenanordnung 34b mit einer E01-Antenne 58b erzeugt werden. Die Antenne 58b ist z.B. an oder in einem dielektrischen Antennenkörper 50b angeordnet, der bei einer Aktorvorrichtung in der Art des Antennenkörpers 50 verwendbar ist. Eine Schutzeinrichtung 192 ist der Mikrowellen-Antennenanordnung 34b vorteilhaft vorgelagert und schützt diese vor Umwelteinflüssen.

Die Stirnseite 49 ist zu dem Hohlleiter 33 hin frei, sodass sie eine freie Stirnfläche aufweist. Prinzipiell wäre es nun denkbar, dass die Stirnfläche einen Anschlag für das Messobjekt 31 beziehungsweise das Aktorglied 14 bildet. Zweckmäßigerweise ist jedoch der Antennenkörper 50 hinter den Anschlag 27 des Gehäuses 13, z.B. eine Stirnwand des Abschlussdeckels 24, zurückversetzt, sodass das Aktorglied 14 nicht auf den Antennenkörper 50 auftrifft, was möglicherweise die Messgenauigkeit beeinträchtigen könnte.

Ein Fluidkanal 66, z.B. ein Druckluftkanal, dient zur Einspeisung von Druckluft über den Druckluftanschluss 19 in die Ausnehmung 28. Der Fluidkanal 66 verläuft radial durch eine Umfangs-Wandung 67 des Koaxialleiterabschnitts 57. Damit sich die Mikrowellen 32 in dem Koaxialleiterabschnitt 57 symmetrisch und ungestört ausbreiten können, sind Kompensationsmittel vorgesehen. Die Kompensationsmittel enthalten beispielsweise einen oder mehrere Kompensationskanäle 68. Dabei ist es zweckmäßig, wenn eine geradzahlige Anzahl von Kompensationskanälen 68 vorhanden ist. Beispielsweise verläuft ein Kompensationskanal 68 an einer dem Fluidkanal 66 gegenüberliegenden Seite der Wandung 67. Weitere Kompensationskanäle 68 können quer zum Druckluftkanal oder Fluidkanal 66 vorgesehen sein. Weitere, in geradzahliger Anzahl vorhandene Kompensationskanäle 68a sind ebenfalls rotationssymmetrisch bezüglich der Kompensationskanäle 68 angeordnet, wobei beispielsweise jeweils zwischen zwei Kompensationskanälen 68 ein Kompensationskanal 68 mittig angeordnet ist. Die Kompensationskanäle 68 sind Blindkanäle oder Sackkanäle. Die Kompensationskanäle 68, 68a verhindern die Bildung unerwünschter Moden bei den Mikrowellen in dem Koaxialleiterabschnitt 57. Beim Beispiel gemäß Fig. 2a erstrecken sich die Kompensationskanäle 68, 68a nur in den Bereich der Wandung 67 des Antennenkörpers 50 hinein. Es wäre auch denkbar, dass sich Kompensationskanäle bis in eine Wandung 45 des Gehäuses 13 beziehungsweise des Abschlussdeckels 24 hinein erstrecken. Dies ist am Beispiel eines Kompensationskanals 68c beispielhaft dargestellt. Bauelemente 46, beispielsweise Ein- und Auskopplungselemente für zu sendende und zu empfangende Mikrowellen, Kondensatoren, Millimeterwellen-Integrated-Circuits, Richtkoppler, Mikrostripstrukturen oder dergleichen sind an einer Tragstruktur 47 an der von dem Hohlleiter 33 abgewandten Seite der Positionsmessvorrichtung 30 angeordnet. Die Tragstruktur 47 bildet zweckmäßigerweise einen Bestandteil des Antennenkörpers 50.

Der Koaxialleiterabschnitt 57 ist sozusagen ein abgeschnittener Koaxialleiter, der mit seiner strahlenden Apertur in den Hohlleiter 33 beziehungsweise den Bewegungsraum 12 mündet. Ein Vorteil dieser Konstruktion ist, dass separate Halteeinrichtungen für eine Koppelsonde, beispielsweise eine pilzartige metallische Koppelsonde oder dergleichen, nicht erforderlich sind. Vielmehr sind die Abstände zwischen den Polflächen 51, 52 im Wesentlichen konstant, sodass die Messeigenschaften der Antennenanordnung 34 optimal sind.

Allerdings haben die Erfinder erkannt, dass der Antennenkörper 50 seine dielektrischen Eigenschaften im Laufe der Zeit, beispielsweise durch Umwelteinflüsse, verändern kann. Es ist zum Beispiel denkbar, dass der Feuchtigkeitsgehalt des Antennenkörpers 50 während des Betriebs der Aktorvorrichtung 10 schwankt, worunter die Messgenauigkeit der Positionsmessvorrichtung 30 leidet.

Veränderte dielektrische Eigenschaften des Antennenkörpers 50 können durch das nachfolgend beschriebene Messverfahren ermittelt und bei späteren Messungen der Position 29 des Messobjekts 31 berücksichtigt werden:

Die Sende- und Empfangseinrichtung 35 ist zum Senden der Mikrowellen 32 mit einer ersten Frequenz oder mit ersten Frequenzen $f1$ ausgestaltet. Zur Messung mindestens einer elektrischen Eigenschaft, beispielsweise der Dielektrizitätszahl, des Antennenkörpers 50 kann die Sende-/Empfangseinrichtung 35 aber auch Mikrowellen 132 mindestens einer zweiten Frequenz $f2$ senden und empfangen. Die Mikrowellen 132 sind zur Ausbreitung und zur Reflexion innerhalb des Antennenkörpers 50 ausgestaltet. Die mindestens eine zweite Frequenz $f2$ ist zweckmäßigerweise kleiner als eine Grenzfrequenz, die zur Ausbreitung von Mikrowellen in dem Hohlleiter 33 erforderlich ist.

Die Anpassungsstruktur 65 ist so beschaffen, dass sie die ersten und zweiten Frequenzen $f1$ und $f2$ durchlässt.

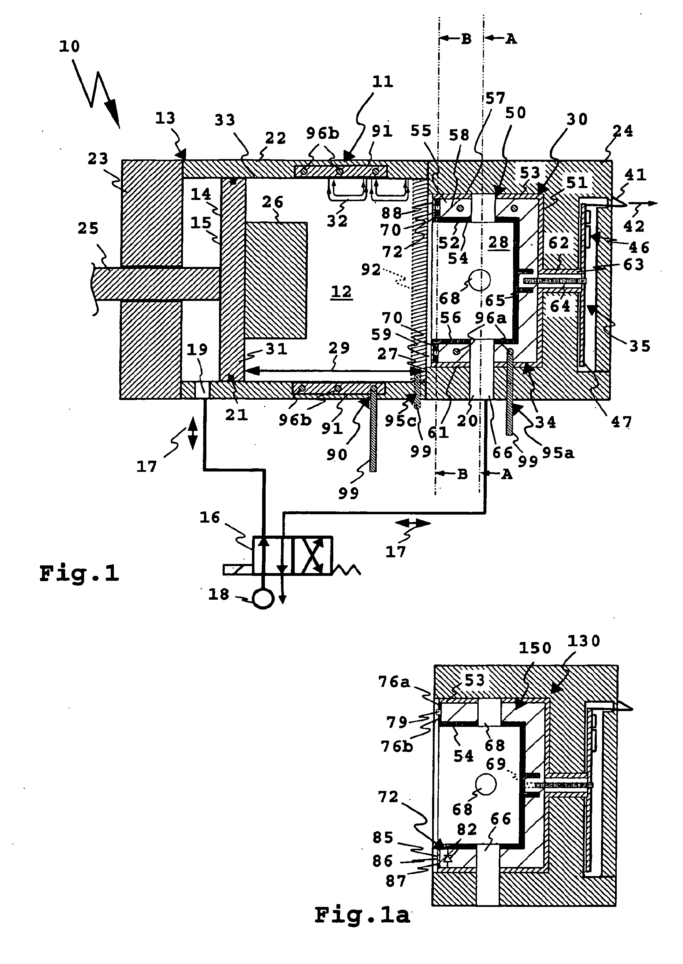

Anstelle der Anpassungsstruktur 65 kann auch eine elektrisch direkt ankoppelnde Verbindung sein, z.B. eine leitende Verbindung 69 zwischen dem Innenleiter 64 und der zweiten Polfläche 52. Die direkt ankoppelnde Verbindung lässt die ersten und zweiten Frequenzen $f1$ und $f2$ durch und leitet die später noch erläuterte Steuergleichspannung Ust. Die Verbindung 69 ist als eine Option gestrichelt in Figur 1a eingezeichnet.

Die Mikrowellen 132 werden innerhalb des Antennenkörpers 132 reflektiert und dienen zur Ermittlung einer Dielektrizitätszahl des Antennenkörpers 50. Schwingkreise 70 bilden für die Mikrowellen 132 einen zumindest fast idealen Kurzschluss -bis auf beispielsweise Schwingkreisverluste.

Die Schwingkreise 70 sind sternförmig im Bereich der Stirnseite 59 des Antennenkörpers 50 angeordnet.

Somit legen die Mikrowellen 132 einen möglichst langen Weg innerhalb des Antennenkörpers 50 zurück. Der Weg der Mikrowellen 132 erstreckt sich von der Sende-/Empfangseinrichtung 35 bis nach vorn in den Bereich der Stirnseite 59, sodass die dielektrischen Eigenschaften nahezu der gesamten Längserstreckungsrichtung des Antennenkörpers 50 Einfluss auf das Messergebnis haben.

Die Sende-/Empfangseinrichtung 35 variiert die Frequenz $f2$ vorteilhaft so lange, bis eine Resonanzfrequenz fres der Schwingkreise 70 aufgefunden ist. Die Sende-/Empfangseinrichtung 35 nutzt zum Auffinden der Resonanzfrequenz z.B. aus, dass der Betrag eines Reflexionsfaktors, den die Sende-/Empfangseinrichtung 35 "sieht", im Bereich der Resonanzfrequenz fres durch die bei Resonanz auftretenden Verluste kleiner, meistens sogar deutlich kleiner, als 1 ist. Ferner hat der Phasenverlauf des Reflexionsfaktors eine Wendestelle. Ein Abstand 71 zwischen der Sende- und Empfangseinrichtung 35 und den Schwingkreisen 70 ist konstant und bekannt.

Die Sende-/Empfangseinrichtung 35 kann zum Auffinden der Resonanzfrequenz auch Resonanzfrequenzen des oder der Schwingkreise durchstimmen. Die Frequenz $f2$ ist dann vorteilhaft konstant.

Z.B. kann anstelle eines Kondensators mit einem festen Kapazitätswert ein Bauelement 73 mit einer variablen Kapazität verwendet werden. Beispielsweise ist die Kapazität 75 durch eine Kapazität C(Ust) einer Kapazitätsdiode 79d eines Schwingkreises 70d gebildet und durch Anlegen einer Steuergleichspannung Ust variabel steuerbar. Die Steuergleichspannung Ust liegt in Sperrrichtung an der Kapazitätsdiode 79d an. Die Kapazitätsdiode 79d kann auch durch eine Hochfrequenzschaltdiode gebildet sein.

Denkbar wäre auch eine variable Induktivität eines Schwingkreises zum Auffinden seiner Resonanzfrequenz.

Die Anpassungsstruktur 65 ist vorteilhaft so beschaffen, dass sie die Steuergleichspannung Ust leitet.

Somit ist eine Position des Kurzschlusses bei den Schwingkreisen 70 bekannt. Aus der Phase zwischen gesendeten und empfangenen Mikrowellen 132 kann auf die relative Dielektrizitätszahl εr des Dielektrikums, das der Antennenkörper 50 enthält, geschlossen werden. Dabei gilt für die Phase φ eines Eingangsreflexionsfaktors des an seinem stirnseitigen Ende durch die Schwingkreise 70 kurzgeschlossen Antennenkörpers 50:

$$\varphi = \pi - 4\pi(x/\lambda) \tag{1}$$

wobei λ die Wellenlänge der Mikrowellen 132 und x die Position des Kurzschlusses gemessen von der Sende-/Empfangseinrichtung 35 sind. Der Antennenkörper 50 stellt ein Dielektrikum mit einer Dielektrizitätszahl εr dar, so dass die Wellenlänge λ im Verhältnis zur Wellenlänge λ0 im Freiraum steht:

$$\lambda = \lambda 0 / SQRT (\varepsilon r) \quad \text{bzw.} \quad \lambda = \frac{\lambda 0}{\sqrt{\varepsilon r}} \tag{2}$$

mit c0 als der Lichtgeschwindigkeit und fres der Resonanzfrequenz der Schwingkreise 70 gilt:

$$\lambda 0 = c 0 / fres \quad \text{bzw.} \quad \lambda 0 = \frac{c0}{fres} \tag{3}$$

Somit kann aus einer gemessenen Phase φ des Eingangsreflexionsfaktors anhand von (1) bis (3) die Dielektrizitätszahl εr des Antennenkörpers ermittelt werden.

Die Schwingkreise 70 sind Serienschwingkreise und bilden Leitmittel 72, die bei den Mikrowellen 132 der zweiten Frequenz f2 wirksam sind. Die Schwingkreise 70 weisen eine Induktivität 74 sowie eine Kapazität 75 auf, die in Reihe geschaltet sind.

Die Induktivität 74 kann durch zwei Teilinduktivitäten 74a, 74b dargestellt werden, da sich die Teilinduktivitäten 74a, 74b addieren.

Beispielsweise kann die Kapazität 75 zwischen den beiden Teilinduktivitäten 74a, 74b angeordnet sein (Figur 3a). Die Teilinduktivitäten 74a, 74b werden beispielsweise durch Leiterabschnitte 76a, 76b, die zu einem Kondensator 79 führen, gebildet. Die Leiterabschnitte 76a, 76b sind beim Ausführungsbeispiel gemäß Figur 3a gleich lang. Somit sind die parasitären Induktivitäten der beiden Leiterabschnitte 76a, 76b gleich groß und addieren sich, beispielsweise zu insgesamt 10 nH.

Der Kondensator 79 ist ein vorteilhaft diskretes Bauelement, beispielsweise ein SMD-Bauelement (Surface Mounted Device), mit einer Kapazität von wenigen Pico-Farad, zum Beispiel 2,5 Pico-Farad. Anstelle des Kondensators 79 kann auch Kapazitätsdiode 79d verwendet werden, deren Kapazität durch Anlegen einer Steuergleichspannung steuerbar ist. Zusammen mit der Induktivität 74 der Leiterabschnitte 76a, 76b ergibt sich somit eine Resonanzfrequenz fres von beispielsweise 1 GHz. Mikrowellen mit dieser Frequenz können sich in dem Hohlleiter 33 nicht ausbreiten. Es versteht sich, dass die Resonanzfrequenz fres vom Durchmesser des jeweiligen Hohlleiters abhängt. Der Durchmesser des Hohlleiters 33 ist ausreichend klein, dass sich Mikrowellen mit der Resonanzfrequenz von 1 GHz nicht in ihm ausbreiten.

Die Leiterabschnitte 76a, 76b sind beispielsweise durch an der Stirnseite 59 nach radial innen beziehungsweise außen verlängerte Abschnitte der Beschichtungen 53, 54 gebildet. Dies ist beispielsweise bei der Ausführungsform gemäß Figur 1a der Fall.

Es ist aber auch denkbar, dass die Leiterabschnitte 76a, 76b Bestandteile jeweils eines Metallstiftes 80 sind. Die Metallstifte 80, an denen z.B. die Kondensatoren 79 angeordnet sind, werden beispielsweise in das Material der Antennenkörper 50 eingegossen. Ferner ist es denkbar, Metallstifte in das dielektrische Material des Antennenkörpers 50 nachträglich einzupressen.

Dabei ist es denkbar, dass beispielsweise von radial innen und radial außen jeweils zwei Teil-Leiterstifte 80a, 80b von radial außen und radial innen in die Wandung 67 eingebracht werden, wobei ein Abstand 81 zwischen den Leiterstiften 80a, 80b die Kapazität 75 herstellt.

Bei Schwingkreisen 70b (Figur 3b) und 70c (Figur 3c) ist die Kapazität 75 radial weiter außen (70b) und einmal radial weiter innen (70c) angeordnet. Dementsprechend sind Leiterabschnitte 77a und 78b kürzer, während Leiterabschnitte 77b und 78a länger sind. Die Gesamtinduktivität der Leiterabschnitte 77a und 77b sowie 78a, 78b entspricht der Gesamtinduktivität der Leiterabschnitte 76a, 76b.

Die Leitmittel 72 können auch eine oder mehrere Hochfrequenzschaltdioden 82 aufweisen.

Ferner ist es zweckmäßig, dielektrische Körper der Aktorvorrichtung 10, zumindest soweit sie im Ausbreitungsbereich der Mikrowellen 32 liegen, gegen Feuchtigkeitseintritt oder- austritt zu schützen. Beispielsweise ist die elektrisch leitfähige Beschichtung 53, 54 derart gewählt, dass sie einen Feuchtigkeitsdurchtritt hemmt oder verhindert. Allerdings ist es möglich, dass Teilbereiche des Antennenkörpers 50 oder eines in Figur 1a gezeigten Antennenkörpers 150 frei von der elektrisch leitfähigen Beschichtung 53, 54 sind.

Beispielsweise ist der Isolationsbereich 60 des Antennenkörpers 50 an der Stirnseite 59 nicht mit den Beschichtungen 53, 54 versehen. Dort ist es zweckmäßig, dass eine elektrisch nicht leitfähige, jedoch Feuchtigkeitsdurchtritt hemmende oder verhindernde Oberflächenlage 86 vorgesehen ist. Die Oberflächenlage 86 ist beispielsweise ein Lack oder eine Beschichtung 87.

Beim Antennenkörper 50 ist als Oberflächenlage 86 z.B. ein Schutzkörper 88 vorgesehen, beispielsweise ein Feuchtigkeitsdurchtritt hemmender Ring, der vor dem stirnseitigen, ringförmigen Isolationsbereich 60 angeordnet ist.

Auch weitere Bereiche der Antennenkörper 50, 150 sind vorteilhaft mit einer Feuchtigkeitsdurchtritt hemmenden oder verhindernden Oberflächenlage 86 versehen. Beispielsweise sind der Fluidkanal 66 und die Kompensationskanäle 68 mit der Beschichtung 87 beschichtet. Alternativ wäre es denkbar, Isolationskörper in die Kanäle 66, 68 einzubringen, beispielsweise eine Hülse 89 in den Fluidkanal 66.

Im Rahmen des erfinderischen Konzepts wurde es erkannt, dass man beispielsweise für die Antennenkörper 50, 150 gegenüber Feuchtigkeitseintritt oder -austritt resistente Materialien verwenden kann, beispielsweise Keramik, geeignete Kunststoffe (Polyethylen (PE), Polypropylen (PP), Teflon (PTFE)), Silizium oder dergleichen.

Neben den Antennenkörpern 50, 150 können auch sonstige im Ausbreitungsbereich der Mikrowellen 32 liegende Dielektrika bei einer Veränderung ihrer Dielektrizitätseigenschaften die Ausbreitungsgeschwindigkeit der Mikrowellen 32 beeinflussen. Beispielsweise können im Gehäuse 13 dielektrische Körper 90 angeordnet sein. Die dielektrischen Körper 90 umfassen beispielsweise einen Gleitring 91 am Innenumfang des Mittelteils 22 sowie eine Schutzeinrichtung 92, die optional vor der Antennenanordnung 34 angeordnet sein kann und diese vor mechanischen Einflüssen, beispielsweise Druckluftstößen, dem Aufprall des Aktorglieds 14 oder dergleichen, schützen kann.

Der Gleitring 91 und die Schutzeinrichtung 92 können zweckmäßigerweise mit einer Feuchtigkeitseintritt oder -austritt hemmenden Beschichtung in der Art der Beschichtung 87 versehen sein und/oder aus einem Material bestehen, das gegenüber Feuchtigkeitseintritt oder -austritt resistent ist, beispielsweise PP, PE, Silizium oder dergleichen.

Als weitere Maßnahme, die relative Feuchtigkeit und somit die dielektrischen Eigenschaften der Antennenkörper 50 und/oder 150 sowie der Körper 90 im Wesentlichen konstant zu halten, dienen Heizeinrichtungen 95a, 95b, 95c.

Die Heizeinrichtung 95a heizt den Antennenkörper 50, wo im wesentlichen Mikrowellen im TEM-Mode auftreten. Die Heizeinrichtung 95b heizt den Gleitring 91 und die optional vorhandenen Schutzeinrichtung 92, beispielsweise einer Kunststoffplatte oder -scheibe, die der Antennenanordnung 95 in Richtung des Bewegungsraumes 12 vorgelagert ist, wo im wesentlichen Mikrowellen im E01-Mode auftreten.

Die Heizeinrichtung 95b könnte auch den dielektrischen Antennenkörper 50b heizen.

Wenn anstelle der Mikrowellen-Antennenanordnung 34 Antennenanordnungen 34c, 34d für Mikrowellen im H11- und/oder H01-Mode vorgesehen sind, sind Heizeinrichtungen 95c und 95d vorteilhaft.

Eine Heizleistung von ca. 3 bis 5 Watt ist z.B. ausreichend, um beispielsweise den Antennenkörper 50 zu beheizen.

Heizleiter 96a - 96d der Heizeinrichtungen 95a - 95d sind im Innern erwärmen das dielektrische Material z.B. der Antennenkörper 50, 50b, 50c und 50d sowie der Körper 90 oder der Schutzeinrichtungen 192, 192d, sodass Feuchtigkeit nicht in das dielektrische Material eindringt oder wieder aus dem dielektrischen Material entweicht. Somit ist das dielektrische Material trocken und weist im Wesentlichen konstante dielektrische Eigenschaften auf.

Die jeweilige Anordnung und geometrische Gestaltung der Heizleiter, z.B. von Heizleiterringen, ist abhängig vom jeweiligen Mikrowellen-Typ im Bereich der Heizleiter.

Die Heizleiter 96a - 96d sind im Wesentlichen quer, in den Ausführungsbeispielen sogar senkrecht, zum Verlauf der elektrischen Felder 97a - 97d der Mikrowellen 32 im Antennenkörper 50 und den Körpern 90 angeordnet.

So sind beispielsweise im Antennenkörper 50 und im Gleitring 91 offene Heizleiterringe 98a, 98b angeordnet. Die Heizleiterringe 98a, 98b haben einen kreisförmigen Verlauf, sodass das radiale elektrische Feld 97a, 97b senkrecht zu den Heizleiterringen 98a, 98b verläuft und durch diese nicht beeinträchtigt wird. Lediglich Anschlussleitungen 99 der offenen Heizleiterringe 98a, 98b verlaufen in radialer Richtung und somit parallel zum elektrischen Feldverlauf 97a, 97b. Die Heizleiterringe 98a verlaufen parallel zwischen den beiden Polflächen 51, 52 der Antennenanordnung 34.

Zu einer möglichst gleichmäßigen und über das gesamte Volumen eines jeweiligen dielektrischen Körpers wirksamen Erwärmung ist es zweckmäßig, mehrere Heizleiter oder Heizleiterringe vorzusehen. So sind beispielsweise in dem Antennenkörper 50 und dem Gleitring 91 in Ausbreitungsrichtung der Mikrowellen 32 mehrere Heizleiter 96a und 96b beziehungsweise mehrere Heizleiterringe 98a, 98b hintereinander angeordnet. Die Heizleiterringe 98a, 98b sind in nicht dargestellter Weise durch Verbindungsabschnitte verbunden. Es versteht sich, dass jeder der Heizleiterringe 98a, 98b auch mittels separater Anschlussleitungen 99 mit elektrischem Strom versorgt werden kann.

Es ist möglich, mehrere Heizleiterringe, die unterschiedliche Durchmesser haben, ineinander anzuordnen, um so eine möglichst große Fläche beziehungsweise ein möglichst großes Volumen zu erwärmen.

Jeder der Heizleiterringe kann über separate Anschlussleitungen mit elektrischem Strom versorgt werden. Es ist auch möglich, Heizleiterringe ineinander sozusagen zu schachteln und mittels gemeinsamer Anschlussleitungen 99 mit elektrischem Strom zu versorgen. Dieses Konzept ist bei der Heizeinrichtung 95c realisiert.

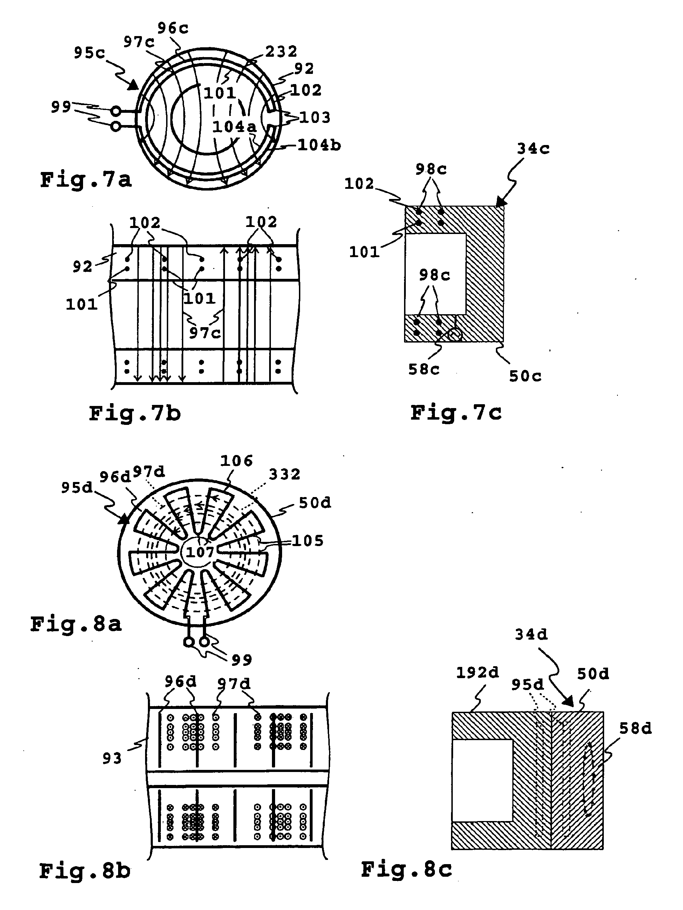

Ein erster Heizleiterring 101 ist innerhalb eines zweiten Heizleiterringes 102 angeordnet. Gemeinsame Anschlussleitungen 99 dienen zur Stromversorgung beider Heizleiterringe 101, 102. An einer den Anschlussleitungen 99 gegenüberliegenden Seite verbinden radiale Verbindungsabschnitte 103 die Heizleiterringe 101, 102. Parallel nebeneinander angeordnete, in Umfangsrichtung des zu beheizenden Schutzkörpers 88 verlaufende Heizleiterabschnitte 104a, 104b sind dann gegensinnig bestromt. Exemplarisch ist in Figur 7a, 7b ein Feldverlauf 97c von Mikrowellen 232 eingezeichnet, die in einem H11-Mode sind. Die Heizleiterringe 101, 102 verlaufen zumindest im Wesentlichen senkrecht zum Feldverlauf 97c. Im Bereich der Anschlussleitungen 99 sowie der Verbindungsabschnitte 103 ist die elektrische Feldstärke der Mikrowellen 232 geringer als im Bereich der Heizleiterringe 101, 102.

H11-Mikrowellen mit einem Feldverlauf 97c können durch eine schematische dargestellte Mikrowellen-Antennenanordnung 34c mit einer H11-Antenne 58c erzeugt werden. Die Antenne 58c ist z.B. an oder in einem dielektrischen Antennenkörper 50c angeordnet, der bei einer Aktorvorrichtung in der Art des Antennenkörpers 50 verwendbar ist.

Einer oder mehrere Heizleiter 96d einer Heizeinrichtung 95d (Figuren 8a, 8b) haben einen flügelradartigen Verlauf, der insbesondere bei einem ringförmigen, beispielsweise kreisförmigen Feldverlauf 97d zweckmäßig ist, der beispielsweise bei Mikrowellen 332 auftritt, die in einem H01-Mode sind.

Die H01-Mikrowellen können durch eine schematische dargestellte Mikrowellen-Antennenanordnung 34d mit einer H01-Antenne 58d erzeugt werden. Die Antenne 58d, die ringförmig angeordnete Dipole aufweist, ist z.B. an oder in einem Antennenkörper 50d angeordnet, der bei einer Aktorvorrichtung in der Art des Antennenkörpers 50 verwendbar ist. Eine Schutzeinrichtung 192d ist der Mikrowellen-Antennenanordnung 34d vorteilhaft vorgelagert und schützt diese vor Umwelteinflüssen. Die Heizeinrichtung 95d ist z.B. in dem Antennenkörper 50d und/oder in der Schutzeinrichtung 192d angeordnet.

Bei dem Heizleiter 96d sind radiale Heizleiterabschnitte 105 senkrecht zum Feldverlauf 97d. Die Heizleiterabschnitte 105 sind durch in Umfangsrichtung des Körpers 93 verlaufende Verbindungsabschnitte 106 miteinander verbunden. Im Bereich der Verbindungsabschnitte 106 ist das elektrische Feld der Mikrowellen 332 geringer als im Bereich der Heizleiterabschnitte 105. Jeweils zwei nebeneinander verlaufende radiale Heizleiterabschnitte 105 sind gegensinnig bestromt. Die Verbindungsabschnitte 106 liegen radial außen. Radial innen sind die Heizleiterabschnitte 105 durch bogenförmige Verbindungsabschnitte 107 miteinander verbunden. Die Verbindungsabschnitte 106 sind länger als die Verbindungsabschnitte 107.

Es versteht sich, dass mehrere der flügelradartigen Heizleiter 96d in Ausbreitungsrichtung der Mikrowellen 332 hintereinander, zweckmäßigerweise äquidistant hintereinander, angeordnet sein können, was z.B. in Figur 8b deutlich wird.

**Patentansprüche**

1. Positionsmessvorrichtung mit einer Mikrowellen-Antennenanordnung (34; 134) zur Bestimmung einer Position (29) eines in einem Bewegungsraum (12) beweglichen Messobjekts (31) anhand von Mikrowellen (32), wobei der Bewegungsraum (12) zumindest teilweise einen Hohlleiter (33) zum Leiten der Mikrowellen (32) bildet, wobei die Mikrowellen-Antennenanordnung (34; 134) einen dielektrischen Antennenkörper (50; 150) zum Einkoppeln und/ oder Auskoppeln der Mikrowellen in den Hohlleiter (33) aufweist, wobei an dem Antennenkörper (50; 150) eine erste Polfläche (51) und eine zweite Polfläche (52), die der Antennenkörper (50; 150) elektrisch voneinander isoliert, einen Koaxialleiterabschnitt (57) bildend zueinander koaxial angeordnet sind, und wobei eine Stirnseite (59) des Koaxialleiterabschnitts (57) mit einem ringförmigen Isolationsbereich (60) zwischen der ersten und der zweiten Polfläche (51, 52) in den Bewegungsraum (12) zum Messobjekt (31) hin orientiert ist, wobei der Koaxialleiterabschnitt (57) des Antennenkörpers (50; 150) einen zu dem Hohlleiter (33) koaxialen Koaxialleiter-Tubusabschnitt (61) aufweist, der eine zu dem Bewegungsraum (12) offene, mittige Ausnehmung (28) aufweist, an der die zweite Polfläche (52) zur Bildung eines Innenleiters des Koaxialleiter-Tubusabschnitts (61) angeordnet ist, **dadurch gekennzeichnet, dass** die Stirnseite (59) des Koaxialleiterabschnitts (57), insbesondere der ringförmige Isolationsbereich (60) , zumindest teilweise eine zum Hohlleiter (33) freie Stirnfläche und einen Anschlag für das Messobjekt (31) bildet.

**2.** Positionsmessvorrichtung nach Anspruch 1, **dadurch gekennzeichnet, dass** der Antennenkörper (50; 150) eine Aperturantenne (58) bildet.

**3.** Positionsmessvorrichtung nach Anspruch 1 oder 2, **dadurch gekennzeichnet, dass** der Antennenkörper (50; 150) im wesentlichen mit einer elektrisch leitfähigen Beschichtung (53, 54) zur Bildung der ersten Polfläche (51) und/ oder der zweiten Polfläche (52) versehen ist.

**4.** Positionsmessvorrichtung nach Anspruch 3, **dadurch gekennzeichnet, dass** die elektrisch leitfähige Beschichtung (53, 54) Feuchtigkeitsdurchtritt hemmt oder verhindert.

**5.** Positionsmessvorrichtung nach Anspruch 2 oder 3, **dadurch gekennzeichnet, dass** mindestens ein Teilbereich (85) des Antennenkörpers (50; 150) frei von der elektrisch leitfähigen Beschichtung (53, 54) ist.

**6.** Positionsmessvorrichtung nach Anspruch 5, **dadurch gekennzeichnet, dass** der mindestens eine Teilbereich (85) den ringförmigen Isolationsbereich (60) und/oder elektrisch isolierende Flächen an einem Koppelabschnitt zum Einkoppeln der Mikrowellen (32) in den Antennenkörper (50; 150) oder zum Auskoppeln der Mikrowellen (32) aus dem Antennenkörper (50; 150) und/oder mindestens ein Kanal (66) oder eine Ausnehmung (68) an dem Antennenkörper (50; 150) umfasst.

**7.** Positionsmessvorrichtung nach einem der vorhergehenden Ansprüche, **dadurch gekennzeichnet, dass** der Antennenkörper (50; 150) zumindest teilweise mit einer Feuchtigkeitsdurchtritt hemmenden oder verhindernden Oberflächenlage (86) versehen ist, wobei die Oberflächenlage (86) zweckmäßigerweise elektrisch isolierend ist und/oder vorteilhaft durch eine Beschichtung (87) oder durch einen Schutzkörper (88), insbesondere eine Hülse oder Scheibe, oder einen Lack gebildet ist.

**8.** Positionsmessvorrichtung nach Anspruch 7, **dadurch gekennzeichnet, dass** die Oberflächenlage (86) an dem mindestens einen Teilbereich (85) ohne elektrisch leitende Beschichtung (53, 54) angeordnet ist.

**9.** Positionsmessvorrichtung nach einem der vorhergehenden Ansprüche, **dadurch gekennzeichnet, dass** der Koaxialleiter-Tubusabschnitt (61) über einen Koaxialleiter-Verbindungsabschnitt (62) mit einer Hochfrequenz-Mikrowellen-Sende- und/oder Empfangseinrichtung (35) verbunden ist.

**10.** Positionsmessvorrichtung nach einem der vorhergehenden Ansprüche, **dadurch gekennzeichnet, dass** Bauteile (46) der Hochfrequenz-Mikrowellen-Sende- und/oder Empfangseinrichtung (35) an dem Antennenkörper (50; 150) angeordnet sind.

**11.** Positionsmessvorrichtung nach einem der vorhergehenden Ansprüche, **dadurch gekennzeichnet, dass** sie eine Heizeinrichtung (95a-95d) zum Heizen eines dielektrischen Körpers (50, 90; 50b-50d, 192) im Ausbreitungsbereich der Mikrowellen (32), insbesondere des Antennenkörpers (50; 150), aufweist, wobei die Heizeinrichtung (95a-95d) zweckmäßigerweise im oder am Antennenkörper (50; 150) angeordnet ist und/oder vorteilhaft Heizleiter (95a-95d) aufweist, die senkrecht oder im wesentlichen senkrecht zum elektrischen Feldverlauf (97a-97c; 97d) der Mikrowellen (32) stehen.

**12.** Positionsmessvorrichtung nach einem der vorhergehenden Ansprüche, **dadurch gekennzeichnet, dass** der Antennenkörper (50; 150) aus einem Feuchtigkeitseintritt extrem hemmenden oder verhindernden Material besteht, insbesondere aus Polyethylen (PE), Polypropylen (PP), Teflon (PTFE), Keramik, glasierte Keramik, Glas oder reinem Silizium.

**13.** Positionsmessvorrichtung nach einem der vorhergehenden Ansprüche, **dadurch gekennzeichnet, dass** der Antennenkörper (50; 150) vor seiner Montage oder Beschichtung getrocknet worden ist.

**14.** Aktorvorrichtung, insbesondere elektrischer und/oder fluidtechnischer Antrieb oder Fluidventil, mit einer Positionsmessvorrichtung (30; 130) nach einem der vorhergehenden Ansprüche, wobei das Messobjekt (31) ein Aktorglied (14) oder ein Ventilglied der Aktorvorrichtung (10) ist.

**Claims**

1. Position sensing device with a microwave aerial arrangement (34; 134) for determining a position (29) of a movable measuring object (31) located in a movement space (12) using microwaves (32), wherein the movement space (12) at least partially forms a waveguide (33) for conducting the microwaves (32), wherein the microwave aerial arrangement (34; 134) comprises a dielectric aerial body (50; 150) for coupling the microwaves (32) into and/or out of the waveguide (33), wherein a first pole face (51) and a second pole face (52) electrically isolated from each other by the aerial body (50; 150) are arranged coaxially with each other while forming a coaxial conductor section (57), and wherein an end face (59) of the coaxial conductor section (57) is oriented into the movement space (12) towards the measuring object (31) with an annular insulation region (60) between the first and second pole faces (51, 52), wherein the coaxial conductor section (57) of the aerial body (50; 150) comprises a coaxial conductor tube section (61) coaxial with the waveguide (33), which has a central recess (28) open towards the movement space (12), on which recess is located the second pole face (52) to form an inner conductor of the coaxial conductor tube section (61), **characterised in that** the end face (59) of the coaxial conductor section (57), in particular the annular insulation region (60), at least partially forms an end face free towards the waveguide (33) and a stop for the measuring object (31).

2. Position sensing device according to claim 1, **characterised in that** the aerial body (50; 150) forms an aperture aerial (58).

3. Position sensing device according to claim 1 or 2, **characterised in that** the aerial body (50; 150) is substantially provided with an electrically conductive coating (53, 54) to form the first pole face (51) and/or the second pole face (52).

4. Position sensing device according to claim 3, **characterised in that** the electrically conductive coating (53, 54) inhibits or prevents moisture penetration.

5. Position sensing device according to claim 2 or 3, **characterised in that** at least one sub-region (85) of the aerial body (50; 150) is free of the electrically conductive coating (53, 54).

6. Position sensing device according to claim 5, **characterised in that** the at least one sub-region (85) includes the annular insulation region (60), and/or electrically insulating surfaces on a coupling section for coupling the microwaves (32) into the aerial body (50; 150) or for coupling the microwaves (32) out of the aerial body (50; 150) and/or at least one channel (66) or a recess (68) on the aerial body (50; 150).

7. Position sensing device according to any of the preceding claims, **characterised in that** the aerial body (50; 150) is at least partially provided with a surface layer (86) which inhibits or prevents moisture penetration, the surface layer (86) being preferably electrically insulating and/or advantageously represented by a coating (87) or by a protective body (88), in particular a sleeve or a disc, or by a paint.

8. Position sensing device according to claim 7, **characterised in that** the surface layer (86) is provided on the at least one sub-region (85) without an electrically conductive coating (53, 54).

9. Position sensing device according to any of the preceding claims, **characterised in that** the coaxial conductor tube section (61) is connected to a high-frequency microwave transmitting and/or receiving device (35) via a coaxial conductor connecting section (62).

10. Position sensing device according to any of the preceding claims, **characterised in that** components of the high-frequency microwave transmitting and/or receiving device (35) are arranged on the aerial body (50; 150).

11. Position sensing device according to any of the preceding claims, **characterised in that** it comprises a heating device (95a-95d) for heating a dielectric body (50, 90; 50b-50d, 192) in the propagation region of the microwaves (32), in particular of the aerial body (50; 150), wherein the heating device (95a-95d) is expediently located on or in the aerial body (50; 150) and/or advantageously comprises heating conductors (95a-95d) which are perpendicular or substantially perpendicular to the electric field lines (97a-97c; 97d) of the microwaves (32).

12. Position sensing device according to any of the preceding claims, **characterised in that** the aerial body (50; 150) is made of a material which inhibits or prevents moisture penetration to an extreme degree, in particular of polyethylene (PE), polypropylene (PP), Teflon (PTFE), a ceramic material, a glazed ceramic material, glass or pure silicon.

**13.** Position sensing device according to any of the preceding claims, **characterised in that** the aerial body (50; 150) is dried before being assembled or coated.

**14.** Actuator device, in particular electric and/or fluid-powered drive or fluid valve, comprising a position sensing device (30; 130) according to any of the preceding claims, wherein the measuring object (31) is an actuator member (14) or a valve member of the actuator device (10).

**Revendications**

**1.** Dispositif de mesure de position avec un système d'antenne à micro-ondes (34 ; 134) afin de déterminer une position (29) d'un objet de mesure (31) mobile dans un espace de déplacement (12) à l'aide de micro-ondes (32), dans lequel l'espace de déplacement (12) forme au moins partiellement un conducteur creux (33) pour diriger les micro-ondes (32), dans lequel le système d'antenne à micro-ondes (34 ; 134) présente un corps d'antenne diélectrique (50 ; 150) pour injecter et/ou extraire les micro-ondes dans le conducteur creux (33), dans lequel il est placé sur le corps d'antenne (50 ; 150) une première surface polaire (51) et une deuxième surface polaire (52) que le corps d'antenne (50 ; 150) isole l'une de l'autre, placées coaxialement l'une à l'autre en formant une section de conducteur coaxial (57), et dans lequel une face frontale (59) de la section de conducteur coaxial (57) est orientée en direction de l'objet de mesure (31) avec une zone d'isolation annulaire (60) entre la première et la deuxième surface polaire (51, 52), dans lequel la section de conducteur coaxial (57) du corps d'antenne (50 ; 150) présente une section tubulaire de conducteur coaxial (61) coaxiale au conducteur creux (33), qui présente un évidement central (28) ouvert en direction de l'espace de déplacement (12), sur lequel est placée la deuxième surface polaire (52) pour former un conducteur intérieur de la section tubulaire de conducteur coaxial (61), **caractérisé en ce que** la face frontale (59) de la section de conducteur coaxial (57), en particulier de la zone d'isolation annulaire (60), forme au moins partiellement une face frontale libre en direction du conducteur creux (33) et une butée pour l'objet de mesure (31).

**2.** Dispositif de mesure de position selon la revendication 1, **caractérisé en ce que** le corps d'antenne (50 ; 150) forme une antenne à ouverture (58).

**3.** Dispositif de mesure de position selon la revendication 1 ou 2, **caractérisé en ce que** le corps d'antenne (50 ; 150) est muni pour l'essentiel d'un revêtement conducteur électrique (53, 54) pour former la première surface polaire (51) et/ou la deuxième surface polaire (52).

**4.** Dispositif de mesure de position selon la revendication 3, **caractérisé en ce que** le revêtement conducteur électrique (53, 54) ralentit ou empêche le passage de l'humidité.

**5.** Dispositif de mesure de position selon la revendication 2 ou 3, **caractérisé en ce qu'**au moins une partie (85) du corps d'antenne (50 ; 150) est dépourvue de revêtement conducteur électrique (53, 54).

**6.** Dispositif de mesure de position selon la revendication 5, **caractérisé en ce que** la partie (85) au nombre d'au moins un comprend la zone d'isolation annulaire (60) et/ou des surfaces isolantes électriques sur une section de couplage pour introduire les micro-ondes (32) dans le corps d'antenne (50 ; 150) ou pour extraire les micro-ondes (32) du corps d'antenne (50 ; 150) et/ou au moins un canal (66) ou un évidement (68) sur le corps d'antenne (50 ; 150).

**7.** Dispositif de mesure de position selon l'une des revendications précédentes, **caractérisé en ce que** le corps d'antenne (50 ; 150) est muni au moins partiellement d'une couche de surface (86) ralentissant ou empêchant la pénétration d'humidité, dans lequel la couche de surface (86) est de manière avantageuse isolante électrique et/ou est formée de manière avantageuse par un revêtement (87) ou par un corps protecteur (88), en particulier une douille ou une plaque, ou par un vernis.

**8.** Dispositif de mesure de position selon la revendication 7, **caractérisé en ce que** la couche de surface (86) est placée sur la partie (85) au nombre d'au moins un dépourvue de revêtement conducteur électrique (53, 54).

**9.** Dispositif de mesure de position selon l'une des revendications précédentes, **caractérisé en ce que** la section tubulaire de conducteur coaxial (61) est reliée par une section de jonction de conducteur coaxial (62) avec un dispositif (35) d'émission et de réception de micro-ondes à haute fréquence.

**10.** Dispositif de mesure de position selon l'une des revendications précédentes, **caractérisé en ce que** des composants (46) du dispositif (35) d'émission et de réception de micro-ondes à haute fréquence sont placés sur le corps d'antenne (50 ; 150).

**11.** Dispositif de mesure de position selon l'une des revendications précédentes, **caractérisé en ce qu'**il présente un dispositif chauffant (95a-95d) pour chauffer un corps diélectrique (50, 90 ; 50b-50d, 192) dans la zone de propagation des micro-ondes (32), en particulier du corps d'antenne (50 ; 150), dans lequel le dispositif chauffant (95a-95d) est placé de manière avantageuse dans ou sur le corps d'antenne (50 ; 150) et/ou présente de manière avantageuse des conducteurs chauffants (95a-95d) qui sont perpendiculaires ou sensiblement perpendiculaires au profil de champ électrique (97a-97c ; 97d) des micro-ondes.

**12.** Dispositif de mesure de position selon l'une des revendications précédentes, **caractérisé en ce que** le corps d'antenne (50 ; 150) est composé d'un matériau extrêmement ralentissant ou empêchant la pénétration d'humidité, en particulier polyéthylène (PE), polypropylène (PP), Téflon (PTFE), céramique, céramique glacée, verre ou silicium pur.

**13.** Dispositif de mesure de position selon l'une des revendications précédentes, **caractérisé en ce que** le corps d'antenne (50 ; 150) a été séché avant son montage ou son revêtement.

**14.** Dispositif actionneur, en particulier entraînement électrique et/ou fluidique ou vanne pour fluide, avec un dispositif de mesure de position (30 ; 130) selon l'une des revendications précédentes, dans lequel l'objet de mesure (31) est un organe actionneur (14) ou un organe de vanne du dispositif actionneur (10).

**Fig.1**

**Fig.1a**

Fig.2a

Fig.2b

Fig.3a

Fig.3b

Fig.3c

Fig.4

Fig.4a

Fig.5a

Fig.5b

Fig.6a

Fig.6b

Fig.6c

Fig.7a

Fig.7b

Fig.7c

Fig.8a

Fig.8b

Fig.8c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10205904 A1
- EP 1752792 A1
- WO 2007128369 A1
- US 4588953 A